# EUROPÄISCHE PATENTSCHRIFT

(11) **EP 1 742 166 B1**
(45) Veröffentlichungstag und Bekanntmachung des Hinweises auf die Patenterteilung: **13.08.2008**
(21) Anmeldenummer: 06013552.2
(22) Anmeldetag: 30.06.2006
(51) Int. Cl.: G06K 7/00, G06K 19/077, H04L 29/06, G06F 21/00, G06F 12/14

(54) **Verfahren zur Zugriffssteuerung auf einen Transponder**
Method for controlling the access to a transponder
Procédé destiné à la commande d'accès à un transpondeur

(30) Priorität: 07.07.2005 DE 102005032473
(43) Veröffentlichungstag der Anmeldung: 10.01.2007
(73) Patentinhaber: ATMEL Germany GmbH, 74072 Heilbronn (DE)
(72) Erfinder: Friedrich, Ulrich, 74248 Ellhofen (DE)

(56) Entgegenhaltungen:
- EP-A- 1 326 202
- DE-A1- 4 342 641
- US-A1- 2004 054 900
- US-A1- 2004 066 278
- FINKENZELLER ET AL: "RFID-Handbuch" RFID HANDBOOK: GRUNDLAGEN UND PRAKTISCHE ANWENDUNGEN, 26. September 2002 (2002-09-26), Seiten 203-224, XP002341283
- KNEBELKAMP M ET AL: "LATEST GENERATION TECHNOLOGY FOR IMMOBILIZER SYSTEMS" WHITE PAPER - DOC CENTER, 19. Januar 2004 (2004-01-19), XP002267281
- FINKENZELLER K: "RFID-Handbuch: Kapitel 8 (Datensicherheit), 10.1 (Transponder mit Speicherfunktion)" HANSER VERLAG, 31. Dezember 1998 (1998-12-31), Seite 133-140, 155-169, XP002394433 München, Wien

## Beschreibung

Die Erfindung betrifft ein Verfahren zur Zugriffssteuerung auf einen Transponder nach dem Oberbegriff des Anspruchs 1.

Derartige Zugriffssteuerungsverfahren finden beispielsweise bei kontaktlosen Identifikationssystemen oder so genannten Radio-Frequency-Identification(RFID)-Systemen Verwendung. Ein derartiges System besteht üblicherweise aus einer Basisstation bzw. einem Lesegerät oder einer Leseeinheit und einer Vielzahl von Transpondern oder Remote-Sensoren, die sich gleichzeitig im Ansprechbereich der Basisstation befinden. Die Transponder bzw. deren Sende- und Empfangseinrichtungen verfügen üblicherweise nicht über einen aktiven Sender für die Datenübertragung zur Basisstation. Derartige nicht aktive Systeme werden als passive Systeme bezeichnet, wenn sie keine eigene Energieversorgung aufweisen, und als semipassive Systeme bezeichnet, wenn sie eine eigene Energieversorgung aufweisen. Passive Transponder entnehmen die zu ihrer Versorgung benötigte Energie dem von der Basisstation emittierten elektromagnetischen Feld.

Zur Datenübertragung von einem Transponder zur Basisstation mit UHF oder Mikrowellen im Fernfeld der Basisstation wird in der Regel die so genannte Backscatter- oder Rückstreukopplung eingesetzt. Hierzu werden von der Basisstation elektromagnetische Trägerwellen emittiert, die durch die Sende- und Empfangseinrichtung des Transponders entsprechend den an die Basisstation zu übertragenden Daten mit einem Modulationsverfahren moduliert und reflektiert werden. Die typischen Modulationsverfahren hierfür sind die Amplitudenmodulation, die Phasenmodulation und die Amplitude-Shift-Keying(ASK)-Unterträgermodulation, bei der die Frequenz oder die Phasenlage des Unterträgers geändert wird.

In dem Normungsvorschlag ISO/IEC_CD 18000-6C vom 07.01.2005 ist ein Zugriffssteuerungsverfahren für Transponder beschrieben. Der Transponder wird hierbei zunächst in einem Auswahl- bzw. Arbitrierungsverfahren aus einer Menge von Transpondern ausgewählt. Bei dem beschriebenen Auswahlverfahren handelt es sich um ein stochastisches Verfahren in Form eines slotbasierten ALOHA-Verfahrens. Derartige Auswahlverfahren sind ausführlich beispielsweise in dem Lehrbuch Klaus Finkenzeller, RFID-Handbuch, 3. Aufl., HANSER, 2002, beschrieben.

Wenn der Transponder ausgewählt bzw. selektiert oder vereinzelt ist, sendet die Leseeinheit eine Anfrage an den Transponder in Form einer Rückübermittlung einer zuvor im Rahmen des Arbitrierungsverfahrens durch den Transponder übertragenen Zufallszahl, worauf der Transponder Protokollsteuerbits (PC) und eine Kennung in Form eines so genannten elektronischen Produktcodes (EPC) an die Leseeinheit überträgt. Die Protokollsteuerbits beinhalten Informationen bezüglich einer physikalischen Schicht der Übertragungsstrecke. Die Kennung bzw. der elektronische Produktcode EPC bildet unter anderem eine durch den Transponder gekennzeichnete Ware ab. Die Zuordnung vom EPC zu der gekennzeichneten Ware ist standardisiert, so dass aus der Kenntnis der EPC auf die Ware geschlossen werden kann. Weiterhin kann der EPC durch die Leseeinheit als Zeiger auf weitere Information, beispielsweise auf ein dem EPC zugeordnetes Passwort, verwendet werden. Das Passwort kann zur Verriegelung von Speicherbereichen des Transponders für Schreibzugriffe dienen.

Die Übertragung des EPC auf Anfrage an die Leseeinheit birgt jedoch gewisse Risiken. So können Unbefugte beim Transport der Waren gezielt nach Waren bestimmten Typs, beispielsweise nach hochwertigen Uhren oder Waffen, suchen, da der warenkennzeichnende EPC ungeschützt übertragen wird. Hierzu ist lediglich ein geeignetes Lesegerät in die Reichweite der Transponder zu bringen, beispielsweise auf einem Autobahnparkplatz oder in Bahnhöfen.

Nach der Übertragung der PC und des EPC durch den Transponder ist ein Lese- und/oder ein Schreibzugriff auf Speicherbereiche des Transponders durch die Leseeinheit möglich, es sei denn, dass bestimmte Bereiche für einen Schreibzugriff verriegelt bzw. gelockt sind. Weiterhin kann ein Lesezugriff auf Passwörter ebenfalls gesperrt sein.

Aus der US 2004/0066278 A1, gegen die die Ansprüche abgegrenzt sind, ist ein Challenge-Response Authentifizierungs-Verfahren, wobei beispielsweise durch einen Transponder eine Zufallszahl ("Challenge Vatue") generiert und an eine Leseeinheit übertragen wird, von der Leseeinheit die Zufallszahl mittels mathematischer Operationen mit einer in ihr abgelegten Kennung verknüpft wird und das verschlüsselte Signal ("Challenge Reply") an den Transponder gesendet wird. Der Transponder verknüpft die Zufallszahl seinerseits mit einer ihm bekannten, zu der Kennung der Leseeinheit korrespondierenden Zufallszahl und vergleicht das Ergebnis mit dem empfangenen Signal. Bei einer erfolgreichen Authentifizierung wird ein Zugriff für die Leseeinheit auf den Transponder freigegeben. Dadurch wird eine Übertragung der Kennung im Klartext vermieden.

Aus der US 2004/0054900 A1 ist ein System umfassend erste und zweite Transponder bekannt, wobei der erste Transponder eine erste Speichereinrichtung aufweist, in welcher ein erster Schlüssel abgelegt ist, und der zweite Transponder eine zweite Speichereinrichtung aufweist und Zugang zu einem zweiten Schlüssel hat. Der erste Transponder generiert eine erste Nachricht, verschlüsselt diese mit einer Zufallszahl und verschlüsselt die bereits verschlüsselte Nachricht mittels des ersten Schlüssels. Durch den zweiten Schlüssel kann die derart verschlüsselte Nachricht entschlüsselt werden.

Trotz einer möglichen Leseverriegelung der Passwörter besteht ein gewisses Sicherheitsrisiko, dass unbefugte Personen auf möglicherweise private Speicherinhalte Zugriff haben.

Bei der Verwendung des Transponders in so genannten Chipkarten können personenbezogene Daten als Speicherinhalt abgelegt sein. Auch hier ist es wünschenswert, den Zugriff auf diese Daten zu reglementieren, um beispielsweise beim Betreten eines Kaufhauses nicht durch Auslesen des Speicherinhaltes automatisch feststellen zu können, ob der betreffende Kunde noch Geld auf der Chipkarte hat oder nicht.

Der Erfindung liegt daher die Aufgabe zugrunde, ein Verfahren zur Zugriffssteuerung auf einen, insbesondere passiven und/oder rückstreubasierten, Transponder der eingangs genannten Art zur Verfügung zu stellen, das einen unbefugten Zugriff auf Speicherbereiche des Transponders, insbesondere auf den EPC, zuverlässig verhindert und gleichzeitig kompatibel zu dem genannten ISO-Normungsvorschlag ist.

Die Erfindung löst diese Aufgabe durch ein Verfahren mit den Merkmalen des Anspruchs 1.

Die Freigabe des Zugriffs kann sich auf eine reine Leseberechtigung lediglich einzelner, einstellbarer Bereiche eines Transponderspeichers oder eines Sensorwertes erstrecken oder, im Falle einer maximalen Zugriffsberechtigung, auf eine Schreib- und Leseberechtigung aller Speicherbereiche bzw. Sensoren und Aktoren, sofern vorhanden, des Transponders beziehen. Da der Transponder unabhängig vom Wert des Kennungsauswahlkriteriums eine Kennung überträgt, ist das erfindungsgemäße Verfahren grundsätzlich normkompatibel. Wenn das Kennungsauswahlkriterium derart eingestellt bzw. gesetzt ist, dass die zweite Kennung durch den Transponder gesendet wird, wird das Senden der ersten Kennung unterdrückt. Wenn die erste Kennung sicherheitsrelevante Informationen enthält und die zweite Kennung lediglich ein Zeiger bzw. eine Referenz auf Informationen ist, die für einen unberechtigten Benutzer wertlos sind, kann somit ein unberechtigter Zugriff

auf den Transponder bzw. auf dessen Speicherbereiche oder Sensorinformationen, sei es schreibend oder lesend, wirksam verhindert werden. Ein berechtigter Benutzer kann die zweite Kennung als Zeiger bzw. Referenz auf ein der zweiten Kennung zugeordnetes, ihm bekanntes Passwort nutzen und durch Senden dieses Passworts an den Transponder den Zugriff freischalten. Wenn das Kennungsauswahlkriteriums derart eingestellt bzw. gesetzt ist, dass die erste Kennung durch den Transponder gesendet wird, kann der Transponder auch in herkömmlichen Systemen, die kein erfindungsgemäßes Zugriffsverfahren unterstützen, verwendet werden.

In einer Weiterbildung des Verfahrens bildet die erste Kennung eine durch den Transponder gekennzeichnete Ware ab. Die erste Kennung kann hierbei insbesondere der EPC sein. Dies ermöglicht einen wirksamen Schutz des EPC vor unbefugtem Zugriff, wobei berechtigte Benutzer durch Eingabe des der zweiten Kennung zugeordneten Passworts Zugriff auf den EPC erhalten.

In einer Weiterbildung des Verfahrens sind die zweite Kennung und/oder das Kennungsauswahlkriterium während des Betriebs des Transponders einstellbar, nachdem von der Leseeinheit das der zweiten Kennung zugeordnete Passwort an den Transponder übertragen wird. Dies ermöglicht eine einfache Veränderung der zweiten Kennung, beispielsweise wenn durch den Transponder gekennzeichnete Waren ausgetauscht bzw. verändert werden.

In einer Weiterbildung des Verfahrens ist der ersten Kennung ein Passwort zugeordnet, wobei eine Änderung der ersten Kennung und/oder eine Freigabe oder eine Verriegelung von Speicherbereichen für Schreib- und/oder Lesezugriffe des Transponders nur dann durchführbar ist, nachdem das der ersten Kennung zugeordnete Passwort an den Transponder übertragen wird. Auf diese Weise wird eine zweite Zugriffsebene geschaffen, auf die bei aktivierter zweiter Kennung erst zugegriffen werden kann, nachdem das der zweiten Kennung zugeordnete Passwort eingegeben wird. Auf diese Weise kann beispielsweise ein größerer Personenkreis Zugriff über die zweite Kennung erhalten, wobei über die erste Kennung bzw. deren zugehöriges Passwort lediglich ein eng begrenzter Personenkreis verfügt, der die darüber zugänglichen, hoch sicherheitsrelevanten Operationen ausführen kann.

In einer Weiterbildung des Verfahrens sind das der ersten Kennung zugeordnete Passwort und/oder das der zweiten Kennung zugeordnete Passwort jeweils einem zugehörigen öffentlichen Passwort zugeordnet, wobei das jeweilige Passwort und das zugehörige *öffentliche Passwort über einen Kryptografiealgorithmus eineindeutig einander zugeordnet sind. Eine derartige Zuordnung ist beispielsweise in DE 10 2005 005436, US 2005/231369 und EP 1 587 001 beschrieben. Auf diese Weise kann das jeweilige öffentliche Passwort auch über eine nicht abhörsichere Funkverbindung in den Transponder geschrieben werden und dort, beispielsweise nicht verriegelt bzw. lesegesperrt oder verschlüsselt, einfach im Speicher abgelegt werden. Da das - private - Passwort nicht bzw. nur mit sehr hohem Aufwand aus dem öffentlichen Passwort berechnet werden kann und ein "Aufschließen" mit Hilfe des öffentlichen Passworts nicht möglich ist, wird die Passwortvergabe bzw. die Passwortspeicherung deutlich vereinfacht. Der Kryptografiealgorithmus kann beispielsweise durch ein lineares rückgekoppeltes Scheiberegister realisiert sein, an dessen Eingang das - private - Passwort bzw. eine aus diesem abgeleitete Bitfolge angelegt wird, wobei an einer einstellbaren Stufe des Schieberegisters das öffentliche Passwort ansteht bzw. als Bitfolge ausgegeben wird. Vorteilhaft wird mindestens ein Parameter des Kryptografiealgorithmus in einem wiederbeschreibbaren, nichtflüchtigen Speicher des Transponders gespeichert. Bei dem Parameter kann es sich beispielsweise um einen Typ des Kryptografiealgorithmus handeln und/oder um eine Stufenangabe, an der das öffentliche Passwort anliegt, wenn ein lineares rückgekoppeltes Scheiberegister zur Realisierung des Kryptografiealgorithmus verwendet wird.

In einer Weiterbildung des Verfahrens werden die erste Kennung, die zweite Kennung, ein der ersten Kennung zugeordnetes öffentliches Passwort und/oder das der zweiten Kennung zugeordnete öffentliche Passwort in einem nichtflüchtigen Speicher des Transponders gespeichert.

In einer Weiterbildung des Verfahrens ist die zweite Kennung in einem der ersten Kennung zugeordneten Speicherbereich gemeinsam mit der ersten Kennung gespeichert. In der ISO/IEC_CD 18000-6C vom 07.01.2005 wird der physikalische Speicher des Transponders in vier logische Bereiche bzw. Bänke aufgeteilt. Hierbei ist dem EPC, d.h. in diesem Fall der ersten Kennung, ein eigener Bereich zugeordnet, wobei in dem Bereich noch Protokollsteuerbits PC und eine CRC gespeichert sind. Die Länge, d.h. die Anzahl der Bits, des EPC ist hierbei einstellbar. Wenn der Speicherbereich nicht vollständig durch den EPC, die PC und den CRC belegt ist, steht dieser zur Speicherung der zweiten Kennung zur Verfügung. Vorteilhaft ist das der zweiten Kennung zugeordnete öffentliche Passwort in dem der ersten Kennung zugeordneten Speicherbereich gemeinsam mit der ersten Kennung und der zweiten Kennung gespeichert. Dies ist dann sinnvoll, wenn in dem Bereich noch Speicherplatz vorhanden ist.

In einer Weiterbildung des Verfahrens wird der Transponder dauerhaft deaktiviert, wenn durch die Leseeinheit ein Kill-Passwort an den Transponder übertragen wird, wobei das Kill-Passwort in einem ihm zugeordneten Speicherbereich des Transponders gespeichert wird. Die Übertragung des Kill-Passworts an den Transponder, üblicherweise in Verbindung mit einem zugehörigen Kommando, bewirkt, dass der Transponder dauerhaft deaktiviert wird. Ein lesender oder schreibender Zugriff auf ihn ist anschließend nicht mehr möglich. Dies wird beispielsweise aus Datenschutzgründen bei einer Verschrottung einer durch den Transponder gekennzeichneten Ware durchgeführt. In der ISO/IEC_CD 18000-6C vom 07.01.2005 ist zur Passwortspeicherung ein eigener logischer Bereich im physikalischen Speicher des Transponders vorgesehen, wobei hier sowohl das Kill-Passwort als auch ein der ersten Kennung zugeordnetes Passwort abgespeichert werden. Vorteilhaft wird das der zweiten Kennung zugeordnete öffentliche Passwort in dem dem Kill-Passwort zugeordneten Speicherbereich gespeichert, wenn das Kill-Passwort deaktiviert ist. Auf diese Weise lässt sich eine gute Speicherausnutzung erzielen.

In einer Weiterbildung des Verfahrens wird das Kennungsauswahlkriterium als ein Bitwert in einem nichtflüchtigen Speicher des Transponders gespeichert. Hierbei kann beispielsweise ein logischer Bitwert "0" des Kennungsauswahlkriteriums eine deaktivierte zweite Kennung und ein logischer Bitwert "1" eine aktivierte zweite. Kennung anzeigen.

In einer Weiterbildung des Verfahrens wird eine Anzahl von fehlerhaften Übertragungen des der zweiten Kennung zugeordnete Passworts im Transponder gezählt und beim Erreichen eines einstellbaren Zählerschwellwertes wird eine Taktversorgung des Transponders deaktiviert. Durch die Deaktivierung der Taktversorgung bzw. eines Oszillators wird der gesamte Transponder deaktiviert, d.h. ein Zugriff auf den Transponder ist nicht mehr möglich. Eine erneute Aktivierung des Transponders bzw. seiner Taktversorgung kann beispielsweise dadurch erreicht werden, dass er aus einem von der Leseeinheit emittierten elektromagnetischen Feld soweit entfernt wird, dass die dem Feld entnommene Leistung zu seiner Versorgung nicht mehr ausreicht. Wenn er anschließend wieder in das Feld eingebracht wird, findet ein so genannter Power-On-Reset statt, wodurch ein Zugriff auf den Transponder wieder möglich ist.

Vorteilhafte Ausführungsformen der Erfindung sind in den Zeichnungen dargestellt und werden nachfolgend beschrieben. Hierbei zeigen schematisch:
- Fig. 1: ein Blockschaltbild eines RFID-Systems mit einer Leseeinheit und einem Transponder,
- Fig. 2: ein Speicherabbild des in Fig. 1 gezeigten Transponders und
- Fig. 3: ein Ablaufschema eines Zugriffs der in Fig. 1 gezeigten Leseeinheit auf den Transponder.

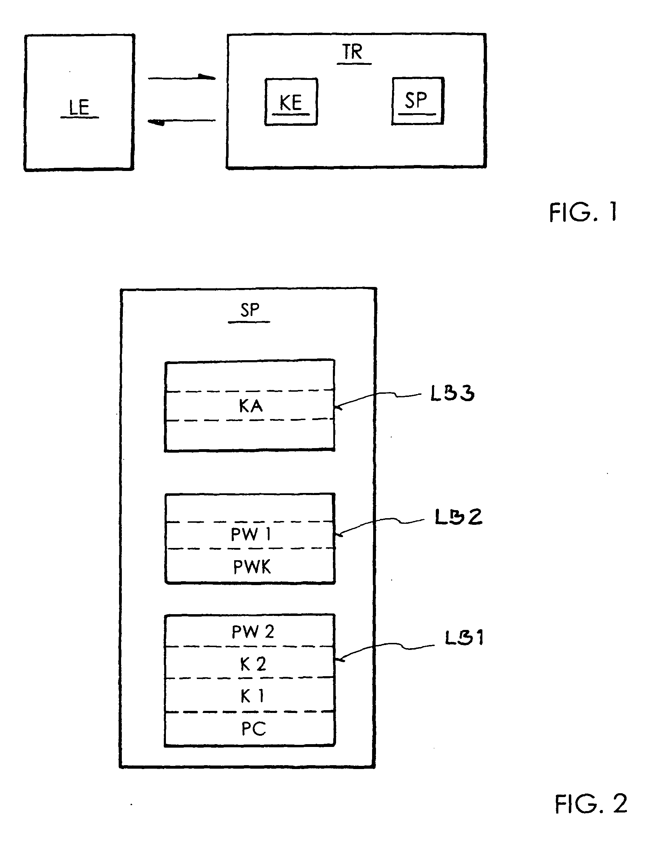

Fig. 1 zeigt schematisch ein Blockschaltbild eines RFID-Systems mit einer Leseeinheit LE und einem passiven rückstreubasierten Transponder TR, die jeweils derart konfiguriert sind, dass sie in ihren Grundfunktionen in Übereinstimmung mit der ISO/IEC_CD 18000-6C vom 07.01.2005 arbeiten. Der Transponder TR umfasst neben weiteren, nicht gezeigten herkömmlichen Funktionseinheiten einen nichtflüchtigen Speicher SP und eine Kryptografieeinheit KE.

Fig. 2 zeigt ein Speicherabbild des in Fig. 1 gezeigten Speichers SP des Transponders TR. Der physikalische Speicher SP ist in logische Bereiche LB1 bis LB3 aufgeteilt, die als Adressangabe bzw. Index bei einem Speicherzugriff der Leseeinheit LE auf den Transponder TR verwendet werden. Neben den gezeigten Bereichen können noch weitere, nicht gezeigte Bereiche vorgesehen sein.

Der logische Bereich LB1 dient zur Speicherung einer ersten Kennung K1 in Form eines elektronischen Produktcodes EPC, einer zweiten Kennung K2 und von Protokollsteuerbits PC. Der logische Bereich LB2 dient zur Speicherung eines der ersten Kennung K1 zugeordneten öffentlichen Passworts PW1 und eines so genannten Kill-Passworts PWK. Das Kill-Passwort PWK wird dazu verwendet, den Transponder TR aus Datenschutzgründen, beispielsweise bei einer Verschrottung einer durch den Transponder TR gekennzeichneten Ware, dauerhaft zu deaktivieren, d.h. Schreib- und Lesezugriffe permanent zu sperren. Der Bereich LB3, der einen Nutzerspeicher zur Speicherung nutzerspezifischer Daten bildet, beinhaltet ein Kennungsauswahlkriterium KA in Form eines einstellbaren Bitwertes. Wenn der Bitwert "1" beträgt ist, die erste Kennung ausgewählt, und wenn der Bitwert "0" beträgt, ist die zweite Kennung ausgewählt.

Ein der zweiten Kennung K2 zugeordnetes öffentliches Passwort PW2 kann im Bereich LB2 und/oder im Bereich LB1 gespeichert werden. In der gezeigten Ausführungsform ist das Passwort PW2 im Bereich LB1 gespeichert, da das Kill-Passwort PWK sowie eine zugehörige Kill-Funktionalität aktiviert sind. Wenn die Kill-Funktionalität jedoch deaktiviert ist, d.h. kein Kill-Passwort PWK benötigt wird, kann das Passwort PW2 auch im Speicherbereich LB2 des Kill-Passworts PWK gespeichert werden.

Die Kryptografieeinheit KE führt einen Kryptografiealgorithmus aus, welcher aus einem von dem Transponder TR empfangenen privaten Passwort eine Ausgangsbitfolge erzeugt, die dem zugehörigen öffentlichen Passwort PW1 bzw. PW2 entspricht. Bei einer Passwortoperation sendet die Leseeinheit LE zunächst das private Passwort an den Transponder TR, worauf dieser eine zugehörige Eingangsbitfolge für die Kryptografieeinheit KE erzeugt. Die Kryptografieeinheit KE wandelt die Eingangsbitfolge in eine Ausgangsbitfolge um, die mit dem öffentlichen, im Transponder TR gespeicherten Passwort PW1 bzw. PW2 verglichen wird. Nur wenn das öffentliche Passwort PW1 bzw. PW2 und die durch die Kryptografieeinheit KE erzeugte Ausgangsbitfolge übereinstimmen, ist die Passworteingabe erfolgreich und es erfolgt eine entsprechende Zugriffsfreigabe. Da der Kryptografiealgorithmus praktisch nicht umkehrbar ist, d.h. aus der Kenntnis des öffentlichen Passworts PW1 bzw. PW2 das zugehörige private Passwort nicht ermittelbar ist, ist ein derartiges Verfahren sicher gegenüber unbefugtem Zugriff. Die Kryptografieeinheit KE umfasst ein nicht gezeigtes, lineares rückgekoppeltes Schieberegister, wobei die Ausgangsbitfolge an einer bestimmten, einstellbaren Register-Stufe des Schieberegisters ansteht. Die Kryptografieeinheit KE ist deaktivierbar, d.h. öffentliches Passwort und privates Passwort stimmen dann überein. Dies ist beispielsweise beim Einsatz des Transponders in Systemen sinnvoll, die eine derartige Verschlüsselung nicht unterstützen.

Ein Aktivieren der öffentlichen Passwörter PW1 und PW2 kann beispielsweise dadurch erfolgen, dass diese an den Transponder TR übertragen und anschließend abgespeichert werden. Dies ist jedoch nur so lange möglich, bis erstmalig ein gültiges Passwort eingestellt bzw. übertragen wird. Wenn beispielsweise vereinbart wird, dass bei einem gültigen öffentlichen Passwort in binärer Darstellung mindestens ein Bit einen Wert "1" aufweisen muss, kann durch Senden eines gültigen Passworts und anschließendes Speichern gleichzeitig eine Aktivierung stattfinden. Nach einer Aktivierung kann eine Passwortänderung erst nach einer Eingabe des alten Passworts erfolgen. Zur Änderung des Passworts PW1 muss zusätzlich zuerst das private zum Passwort PW2 gehörende Passwort eingegeben werden, bevor das private zum Passwort PW1 gehörende Passwort eingegeben werden kann.

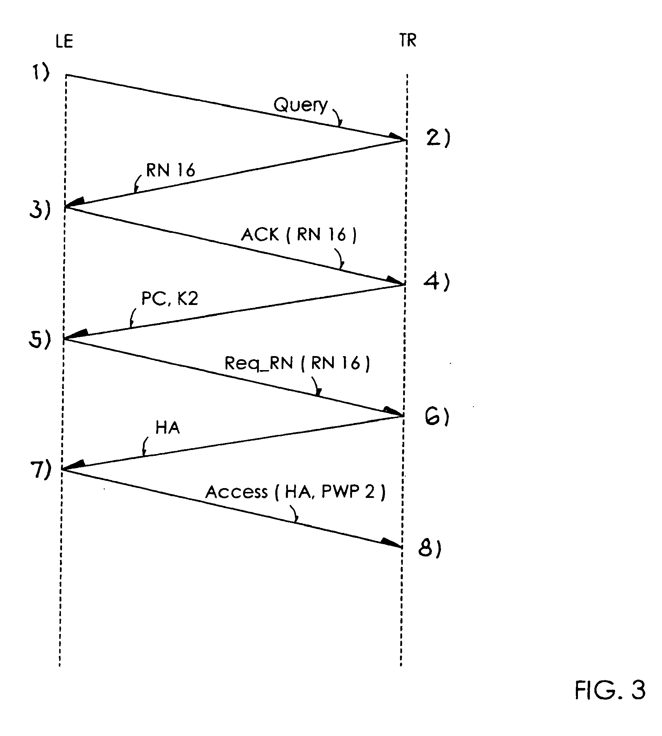

Fig. 3 zeigt ein Ablaufschema eines Zugriffs der Leseeinheit LE auf den Transponder TR, wenn das Kennungsauswahlkriterium KA zur Auswahl der zweiten Kennung K2 eingestellt ist, d.h. wenn der zugehörige Bitwert "0" beträgt.

Der Zugriff wird durch ein Auswahlverfahren eingeleitet. Bei dem Auswahlverfahren handelt es sich um ein herkömmliches slotbasiertes ALOHA-Verfahren. Zur Einleitung des Auswahlverfahrens sendet die Leseeinheit LE ein so genanntes Query-Kommando an den Transponder TR. Wenn ein transponderinterner Slotzähler einen Wert null aufweist, sendet der Transponder TR eine intern erzeugte 16-bit-Zufallszahl RN16 an die Leseeinheit LE.

Die Zufallszahl RN16 wird durch die Leseeinheit LE empfangen. Die Leseeinheit sendet daraufhin eine Anfrage in Form eines so genannten ACK-Kommandos an den Transponder TR, das als ein Kommandoparameter die empfangene Zufallszahl RN16 enthält.

Der Transponder TR empfängt das ACK-Kommando sowie die darin enthaltene Zufallszahl und überprüft, ob die von ihm gesendete Zufallszahl RN16 mit der empfangenen Zufallszahl übereinstimmt. Stimmen die Zufallszahlen nicht überein, reagiert der Transponder TR nicht auf die Anfrage bzw. das empfangene ACK-Kommando. Bei Übereinstimmung überprüft der Transponder TR sein Kennungsauswahlkriterium KA und sendet, da im gezeigten Fall die zweite Kennung K2 ausgewählt ist, die zweite Kennung K2 und Protokollsteuerbits PC an die Leseeinheit LE. Die Protokollsteuerbits PC beinhalten Informationen bezüglich einer physikalischen Schicht der Übertragungsstrecke. Im gezeigten Ausführungsbeispiel sind die Protokollsteuerbits PC der ersten Kennung K1 zugeordnet. Es ist jedoch auch möglich einen weiteren Satz Protokollsteuerbits einzuführen, die ausschließlich der zweiten Kennung zugeordnet sind.

Die Leseeinheit LE empfängt die zweite Kennung K2 und die Protokollsteuerbits PC. Die zweite Kennung K2 dient als Referenz für ein der zweiten Kennung zugeordnetes privates Passwort PWP2. Wenn die Leseeinheit LE von einem berechtigten Benutzer betrieben wird und beispielsweise eine Datenbank mit einer Zuordnung "Kennung zu Passwort" enthält, bestimmt sie anhand der Datenbank und der zweiten Kennung das zugehörige, zum öffentlichen Passwort PW2 gehörende private Passwort PWP2.

Die Leseeinheit LE sendet nun ein Req_RN-Kommando, in dem als Parameter die zuvor empfangene Zufallszahl enthalten ist.

Der Transponder TR empfängt das Req_RN-Kommando sowie die darin enthaltene Zufallszahl. Wenn die empfangene Zufallszahl mit der Zufallszahl RN16 übereinstimmt, sendet der Transponder TR einen so genannten Handle HA an die Leseeinheit LE, den diese in nachfolgenden Zugriffen als Parameter verwendet, der eine bestehende, d.h. gültige Verbindung anzeigt. Wenn die Zufallszahlen nicht übereinstimmen, erfolgt keine Reaktion durch den Transponder. Das Senden des Req_RN-Kommandos und das Rücksenden des Handles HA ist optional.

Die Leseeinheit sendet nun ein so genanntes Access-Kommando, in dem als Parameter das private Passwort PWP2 und der Handle HA enthalten ist.

Der Transponder TR empfängt das Access-Kommando und überprüft zunächst, ob ein gültiger Handle HA empfangen wurde. Ist dies nicht der Fall, wird das empfangene Access-Kommando ignoriert. Liegt ein gültiger Handle HA vor, wird das empfangene private Passwort PWP2 in eine Bitfolge umgewandelt, die in die Kryptografieeinheit KE als Eingangsbitfolge eingegeben wird. Die Ausgangsbitfolge der Kryptografieeinheit KE wird mit dem im Bereich LB1 gespeicherten öffentlichen Passwort PW2 verglichen. Stimmen die Ausgangsbitfolge und das Passwort PW2 überein, sind ab diesem Zeitpunkt lesende und schreibende Zugriffe auf den Transponder TR möglich. Bei Nichtübereinstimmung ist kein lesender und schreibender Zugriff möglich. Dies verhindert, dass in einem Fall, wenn die Leseeinheit LE von einem unbefugten Benutzer betrieben wird, beispielsweise die erste Kennung K1 in Form einer Produktkennzeichnung ausgelesen werden kann.

Das Kennungsauswahlkriterium KA und das zweite Passwort PW2 bzw. PWP2 können von einem Benutzer während des Betriebs des Transponders TR verändert werden. Hierzu muss zunächst das alte private Passwort PWP2 zusammen mit einem Access-Kommando an den Transponder TR übertragen werden. Anschließend wird das neue Passwort bzw. ein neuer Wert des Kennungsauswahlkriteriums KA zusammen mit einem entsprechenden Kommando an den Transponder übertragen.

Das erste öffentliche Passwort PW1 bzw. ein ihm zugeordnetes privates Passwort PWP1 dient zur Verriegelung bzw. Entriegelung von Schreibzugriffen auf bestimmte Speicherbereiche des Transponders. Derartige Operationen werden in der Regel lediglich von einem privilegierten Personenkreis vorgenommen.

Die Anfrage zum Auslösen der Kennungsübertragung durch den Transponder TR wird in der gezeigten Ausführungsform in Form eines ACK-Kommandos an den Transponder TR übertragen. Wenn der Transponder alternativ oder zusätzlich auch nach dem so genannten Reader-talks-first-Prinzip arbeitet, kann eine Anfrage implizit auch dadurch bewirkt werden, dass der Transponder in einen Ansprechbereich der Leseeinheit LE eintritt und somit durch ein von der Leseeinheit emittiertes elektromagnetisches Feld mit Spannung versorgt wird.

Die Übertragung der privaten Passwörter PWP1 bzw. PWP2 kann optional verschlüsselt erfolgen. Hierzu kann beispielsweise die vom Transponder übertragene Zufallszahl RN16 verwendet werden, die von einem "Angreifer", der versucht den Datenverkehr abzuhören, aufgrund der durch den Backscatterbetrieb bedingten, minimalen Signalstärken des zurückgestreuten Signals praktisch nicht abgehört werden kann. Die Leseeinheit führt dann eine XOR-Operation mit dem zu sendenden privaten Passwort PWP1 bzw. PWP2 und der Zufallszahl RN16 durch. Eine Entschlüsselung erfolgt im Transponder wiederum ebenfalls durch Ausführen einer XOR-Operation mit dem empfangenen, verschlüsselten privaten Passwort PWP1 bzw. PWP2 und der Zufallszahl RN16.

Im gezeigten Ausführungsbeispiel wird zur Transponderselektion ein stochastisches Auswahlverfahren in Form des slotbasierten ALOHA-Verfahrens durchgeführt. Selbstverständlich kann stattdessen auch ein deterministisches Auswahlverfahren durchgeführt werden, an welches sich nach der Selektion die beschriebenen zugriffssteuernden Schritte anschließen können.

Das gezeigte Verfahren zur Zugriffssteuerung verhindert wirkungsvoll einen unbefugten Zugriff auf Speicherbereiche des Transponders TR, insbesondere auf die erste Kennung bzw. den EPC, und ist gleichzeitig kompatibel zu dem genannten ISO-Normungsvorschlag.

## Patentansprüche

1. Verfahren zur Zugriffssteuerung auf einen Transponder (TR), bei dem eine erste Kennung (K1) und eine zweite Kennung (K2) im Transponder (TR) gespeichert werden, und eine Leseeinheit (LE) eine Anfrage zum Auslösen einer Kennungsübertragung an den Transponder (TR) überträgt,
**dadurch gekennzeichnet, dass**
- im Transponder ein Kennungsauswahlkriterium (KA) gespeichert wird, wobei ein Wert des Kennungsauswahlkriteriums (KA) veränderbar ist,
- bei der genannten Anfrage zum Auslösen einer Kennungsübertragung durch die Leseeinheit (LE) der Transponder in Abhängigkeit von dem Wert des Kennungsauswahlkriteriums (KA) entweder die erste Kennung (K1) oder die zweite Kennung (K2) überträgt und
- wenn der Wert des Kennungsauswahlkriteriums (KA) so eingestellt ist, dass die zweite Kennung (K2) übertragen wird, ein Zugriff auf die erste Kennung und/oder einstellbare Speicherbereiche des Transponders nur dann durch den Transponder freigegeben wird, wenn von der Leseeinheit (LE) ein der zweiten Kennung (K2) zugeordnetes Passwort (PWP2) an den Transponder übertragen wird.

2. Verfahren nach Anspruch 1, **dadurch gekennzeichnet, dass** wenn das Kennungsauswahlkriterium (KA) so eingestellt ist, dass die zweite Kennung (K2) übertragen wird, ein Zugriff auf die erste Kennung (K1) nur dann durch den Transponder freigegeben wird, wenn von der Leseeinheit (LE) ein der zweiten Kennung (K2) zugeordnetes Passwort (PWP2) an den Transponder übertragen wird.

3. Verfahren nach Anspruch 1 oder 2, **dadurch gekennzeichnet, dass** die erste Kennung (K1, EPC) eine durch den Transponder (TR) markierte Ware abbildet.

4. Verfahren nach Anspruch 1, 2 oder 3, **dadurch gekennzeichnet, dass** die zweite Kennung (K2) und/oder das Kennungsauswahlkriterium (KA) während des Betriebs des Transponders einstellbar sind, nachdem von der Leseeinheit (LE) das der zweiten Kennung (K2) zugeordnete Passwort (PWP2) an den Transponder (TR) übertragen wird.

5. Verfahren nach einem der vorhergehenden Ansprüche, **dadurch gekennzeichnet, dass** der ersten Kennung (K1) ein Passwort (PWP1) zugeordnet ist, wobei eine Änderung der ersten Kennung (K1) und/oder eine Freigabe oder eine Verriegelung von Speicherbereichen für Schreib- und/oder Lesezugriffe des Transponders nur dann durchführbar ist, nachdem das der ersten Kennung zugeordnete Passwort (PWP1) an den Transponder (TR) übertragen wird.

6. Verfahren nach Anspruch 5, **dadurch gekennzeichnet, dass** das der ersten Kennung (K1) zugeordnete Passwort (PWP1) und/oder das der zweiten Kennung (K2) zugeordnete Passwort (PWP2) jeweils einem zugehörigen öffentlichen Passwort (PW1, PW2) zugeordnet sind, wobei das jeweilige Passwort (PWP1, PWP2) und das zugehörige öffentliche Passwort (PW1, PW2) über einen Kryptografiealgorithmus eineindeutig einander zugeordnet sind.

7. Verfahren nach Anspruch 6, **dadurch gekennzeichnet, dass** mindestens ein Parameter des Kryptografiealgorithmus in einem wiederbeschreibbaren, nichtflüchtigen Speicher des Transponders gespeichert wird.

8. Verfahren nach einem der Ansprüche 6 oder 7, **dadurch gekennzeichnet, dass** die erste Kennung (K1), die zweite Kennung (K2), ein der ersten Kennung zugeordnetes öffentliches Passwort (PW1) und/oder das der zweiten Kennung zugeordnete öffentliche Passwort (PW2) in einem nichtflüchtigen Speicher (SP) des Transponders gespeichert werden.

9. Verfahren nach Anspruch 8, **dadurch gekennzeichnet, dass** die zweite Kennung in einem der ersten Kennung zugeordneten Speicherbereich (LB1) gemeinsam mit der ersten Kennung (K1) gespeichert ist.

10. Verfahren nach Anspruch 9, **dadurch gekennzeichnet, dass** das der zweiten Kennung (K2) zugeordnete öffentliche Passwort (PW2) in dem der ersten Kennung (K1) zugeordneten Speicherbereich (LB1) gemeinsam mit der ersten Kennung (K1) und der zweiten Kennung (K2) gespeichert ist.

11. Verfahren nach einem der vorhergehenden Ansprüche, **dadurch gekennzeichnet, dass** der Transponder (TR) dauerhaft deaktiviert wird, wenn durch die Leseeinheit (LE) ein Kill-Passwort (PWK) an den Transponder (TR) übertragen wird, wobei das Kill-Passwort (PWK) in einem ihm zugeordneten Speicherbereich (LB2) des Transponders (TR) gespeichert wird.

12. Verfahren nach Anspruch 11, **dadurch gekennzeichnet, dass** das der zweiten Kennung (K2) zugeordnete öffentliche Passwort (PW2) in dem dem Kill-Passwort zugeordneten Speicherbereich (LB2) gespeichert wird, wenn das Kill-Passwort deaktiviert ist.

13. Verfahren nach einem der vorhergehenden Ansprüche, **dadurch gekennzeichnet, dass** das Kennungsauswahlkriterium (KA) als ein Bitwert in einem nichtflüchtigen Speicher (SP, LB3) des Transponders (TR) gespeichert wird.

14. Verfahren nach einem der vorhergehenden Ansprüche, **dadurch gekennzeichnet, dass** eine Anzahl von fehlerhaften Übertragungen des der zweiten Kennung (K2) zugeordneten Passworts (PWP2) im Transponder (TR) gezählt wird und beim Erreichen eines einstellbaren Zählerschwellwertes eine Taktversorgung des Transponders deaktiviert wird.

## Claims

1. A method for access control to a transponder (TR), in which a first identification (K1) and a second identification (K2) are stored in the transponder and a reader unit (LE) sends a request to the transponder (TR) for initiating a transmission of an identification, **characterized in that**
- an identification selection criterion (KA) is stored in the transponder, wherein a value of the identification selection criterion (KA) is adjustable,
- upon said request for initiating a transmission of the identification by the reader unit (LE), the transponder transmits either the first identification (K1) or the second identification (K2) dependent on the identification selection criterion (KA); and
- if the value of the identification selection criterion (KA) is set for transmission of the second identification (K2), access to the first identification and/or adjustable memory areas is only released when the reader unit (LE) transmits a password (PWP2) assigned to the second identification (K2) to the transponder.

2. The method according to claim 1, **characterized in that** if the identification selection criterion (KA) is set for transmission of the second identification (K2), access to the first identification (K1) is only released by the transponder when the reader unit (LE) transmits a password (PWP2) assigned to the second identification (K2) to the transponder.

3. The method according to claim 1 or 2, **characterized in that** the first identification (K1, EPC) identifies a product tagged with the transponder (TR).

4. The method according to claim 1, 2 or 3, **characterized in that** the second identification (K2) and/or the identification selection criterion (KA) may be set during operation of the transponder, after the reader unit (LE) transmits a password (PWP2) assigned to the second identification (K2) to the transponder (TR).

5. The method according to any of the preceding claims, **characterized in that** a password (PWP1) is assigned to the first identification (K1), wherein a change in the first identification (K1) and/or a release or blocking of the memory areas for read and/or write access of the transponder is only feasible after the password (PWP1) assigned to the first identification is transmitted to the transponder (TR).

6. The method according to claim 5, **characterized in that** the password (PWP1) assigned to the first identification (K1) and/or the password (PWP2) assigned to the second identification (K2) are each assigned an associated public password (PW1, PW2), wherein the first and second passwords (PWP1, PWP2) and the associated public passwords (PW1, PW2) are assigned to one another on the basis of a cryptographic algorithm.

7. The method according to claim 6, **characterized in that** at least one parameter of the cryptography algorithm is stored in a rewritable, nonvolatile memory of the transponder.

8. The method according to claims 6 or 7, **characterized in that** the first identification (K1), the second identification (K2), a public password (PW1) assigned to the first identification, and/or a public password (PW2) assigned to the second identification are stored in a nonvolatile memory (SP) of the transponder.

9. The method according to claim 8, **characterized in that** the second identification is stored in a memory area (LB1) allocated to the first identification together with the first identification (K1).

10. The method according to claim 9, **characterized in that** the public password (PW2) assigned to the second identification (K2) is stored in the memory area (LB1) allocated to the first identification (K1) together with the first identification (K1) and the second identification (K2).

11. The method according to any of the preceding claims, **characterized in that** the transponder (TR) is permanently deactivated, when the reader unit (LE) transmits a kill password (PWK) to the transponder (TR), the kill password (PWK) being stored in a memory area (LB2) of the transponder (TR) allocated thereto.

12. The method according to claim 11, **characterized in that** the public password (PW2) assigned to the second identification (K2) is stored in the memory area (LB2) allocated to the kill password (PWK) when the kill password is deactivated.

13. The method according to any of the preceding claims, **characterized in that** the identification selection criterion (KA) is stored as a bit value in a nonvolatile memory (SP, LB3) of the transponder (TR).

14. The method according to any of the preceding claims, **characterized in that** a number of faulty transmissions of the password (PWP2) assigned to the second identification (K2) is counted in the transponder (TR) and when a settable counter threshold is reached, a clock supply of the transponder is deactivated.

## Revendications

1. Procédé pour la commande de l'accès à un transpondeur (TR), dans lequel on mémorise une première caractéristique (K1) et une deuxième caractéristique (K2) dans le transpondeur (TR), et dans lequel une unité de lecture (LE) transmet une demande de connexion de la transmission d'une caractéristique au transpondeur (TR), **caractérisé en ce que**
. un critère de sélection de caractéristique (KA) est mémorisé dans le transpondeur, une valeur du critère de sélection de caractéristique (KA) étant modifiable,
. lorsque l'unité de lecture (LE) demande la connexion précitée de la transmission d'une caractéristique, le transpondeur transmet en fonction de la valeur du critère de sélection de caractéristique (KA) soit la première caractéristique (K1) soit la deuxième caractéristique (K2), et
. lorsque la valeur du critère de sélection de caractéristique (KA) est déterminée de manière à transmettre la deuxième caractéristique (K2), un accès à la première caractéristique et/ou à des zones de mémoire réglables du transpondeur n'est autorisé par le transpondeur que lorsque l'unité de lecture (LE) transmet au transpondeur un mot de passe (PWP2) associé à la deuxième caractéristique (K2).

2. Procédé selon la revendication 1, **caractérisé en ce que** lorsque le critère de sélection de caractéristique (KA) est déterminé de manière à transmettre la deuxième caractéristique (K2), un accès à la première caractéristique (K1) n'est autorisé par le transpondeur que lorsque l'unité de lecture (LE) transmet au transpondeur un mot de passe (PWP2) associé à la deuxième caractéristique (K2).

3. Procédé selon la revendication 1 ou 2, **caractérisé en ce que** la première caractéristique (K1, EPC) représente un article marqué par le transpondeur (TR).

4. Procédé selon la revendication 1, 2 ou 3, **caractérisé en ce que** la deuxième caractéristique (K2) et/ou le critère de sélection de caractéristique (KA) peuvent être modifiés en cours de fonctionnement du transpondeur, après transmission par l'unité de lecture (LE) au transpondeur (TR) du mot de passe (PWP2) associé à la deuxième caractéristique (K2).

5. Procédé selon l'une quelconque des revendications précédentes, **caractérisé en ce qu'**un mot de passe (PWP1) est associé à la première caractéristique (K1), sachant qu'une modification de la première caractéristique (K1) et/ou une libération ou un verrouillage de zones de mémoires pour des accès en écriture et/ou en lecture du transpondeur ne peuvent être effectués qu'après transmission au transpondeur (TR) du mot de passe (PWP1) associé à la première caractéristique.

6. Procédé selon la revendication 5, **caractérisé en ce que** le mot de passe (PWP1) associé à la première caractéristique (K1) et/ou le mot de passe (PWP2) associé à la deuxième caractéristique (K2) sont chacun associés à un mot de passe (PW1, PW2) public associé, chacun des mots de passe (PWP1, PWP2) et le mot de passe public associé (PW1, PW2) étant associés l'un à l'autre de manière biunivoque par un algorithme cryptographique.

7. Procédé selon la revendication 6, **caractérisé en ce qu'**au moins un paramètre de l'algorithme cryptographique est mémorisé dans une mémoire réinscriptible, non-volatile du transpondeur.

8. Procédé selon l'une quelconque des revendications 6 ou 7, **caractérisé en ce que** la première caractéristique (K1), la deuxième caractéristique (K2), un mot de passe public (PW1) associé à la première caractéristique et/ou le mot de passe public (PW2) associé à la deuxième caractéristique sont mémorisés dans une mémoire non-volatile (SP) du transpondeur.

9. Procédé selon la revendication 8, **caractérisé en ce que** la deuxième caractéristique est mémorisée avec la première caractéristique (K1) dans une zone de mémoire (LB1) associée à la première caractéristique.

10. Procédé selon la revendication 9, **caractérisé en ce que** le mot de passe public (PW2) associé à la deuxième caractéristique (K2) est mémorisé ensemble avec la première caractéristique (K1) et la deuxième caractéristique (K2) dans la zone de mémoire (LB1) associée à la première caractéristique (K1).

11. Procédé selon l'une quelconque des revendications précédentes, **caractérisé en ce que** le transpondeur (TR) est désactivé durablement lorsqu'un mot de passe fatal (PWK) est transmis par l'unité de lecture (LE) au transpondeur (TR), le mot de passe fatal (PWK) étant mémorisé dans une zone de mémoire (LB2) qui lui est associée du transpondeur (TR).

12. Procédé selon la revendication 11, **caractérisé en ce que** le mot de passe public (PW2) associé à la deuxième caractéristique (K2) est mémorisé dans la zone de mémoire (LB2) associée au mot de passe fatal, lorsque le mot de passe fatal est désactivé.

13. Procédé selon l'une quelconque des revendications précédentes, **caractérisé en ce que** le critère de sélection de caractéristique (KA) est mémorisé sous la forme d'une valeur en bits dans une mémoire non-volatile (SP, LB3) du transpondeur (TR).

14. Procédé selon l'une quelconque des revendications précédentes, **caractérisé en ce qu'**un nombre de transmissions erronées du mot de passe (PWP2) associé à la deuxième caractéristique (K2) est compté dans le transpondeur (TR) et **en ce que** lorsqu'une valeur de seuil de comptage réglable est atteinte, une impulsion d'horloge du transpondeur est désactivée.
